Europäisches Patentamt

European Patent Office

Office européen des brevets

(11) Veröffentlichungsnummer: **0 374 268 B1**

## (12) EUROPÄISCHE PATENTSCHRIFT

(45) Veröffentlichungstag der Patentschrift: **06.05.92**

(21) Anmeldenummer: **88120922.5**

(22) Anmeldetag: **14.12.88**

(51) Int. Cl.⁵: **F16D 27/10**, F16D 27/14, F16D 13/75, F16D 63/00, F16D 65/54

(54) **Selbsttätige Nachstellvorrichtung für elektromagnetisch betätigte Kupplungs- und/oder Bremsaggregate.**

(43) Veröffentlichungstag der Anmeldung:
**27.06.90 Patentblatt 90/26**

(45) Bekanntmachung des Hinweises auf die Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
EP-A- 0 054 734     DE-U- 8 624 705
FR-A- 1 252 875     FR-A- 2 539 195
US-A- 3 391 768     US-A- 4 640 400

(73) Patentinhaber: **Christian Mayr GmbH & Co. KG
Eichenstrasse 1
W-8951 Mauerstetten(DE)**

(72) Erfinder: **Weiss, Harald
Hüttenstr. 14
W-8950 Kaufbeuren 2(DE)**
Erfinder: **Schilling, Karl
Alfastr. 4
W-8951 Stötten a. Auerberg(DE)**
Erfinder: **Höfler, Winfried
Robert-Steiger-Str. 46
W-8908 Krumbach(DE)**
Erfinder: **Klingler, Günter
Alpenstr. 2
W-8951 Oberostendorf(DE)**

(74) Vertreter: **Ruschke, Hans Edvard et al
Patentanwälte Dipl.-Ing. Olaf Ruschke
Dipl.-Ing. Hans E. Ruschke Dipl.-Ing. Jürgen
Rost Dipl.-Chem. Dr. U. Rotter Pienzenauerstrasse 2
W-8000 München 80(DE)**

**Beschreibung**

Die vorliegende Erdingung betrifft eine selbsttätige Nachstellvorrichtung für den Luftspalt eines durch elektromagnetische und Federkräfte betätigten Kupplungs-und/oder Bremsaggregates nach dem Oberbegriff des Patentanspruches 1. Derartige Nachstellvorrichtungen sind in zahlreichen Varianten bekannt, so u.a. auch aus der EP-A-54 734 der Anmelderin Christian Mayr GmbH & Co. KG.

Derartige, selbsttätig nachstellende Kupplungs- und/oder Bremsaggregate haben den Vorteil, daß ein gleichmäßiger Luftspalt gleichmäßige Verhältnisse bringt. Dies bedeutet gleichbleibende Schaltzeiten und eine erhöhte Positioniergenauigkeit, wobei der Anwender eines solchen Kupplungs- und/oder Bremsaggregats keine Nachstellung des Luftspalts vorzunehmen braucht.

Ein selbsttätig nachstellendes Kupplungs- und/oder Bremsaggregat nach der vorgenannten EP-A-54 734 ist insofern nachteilig, als die Drehmomentübertragung von der Welle zur Ankerscheibe über zwei hintereinander geschaltete Übertragungs-Ringfedern (Lamellen) geschieht, von denen die eine die Drehmomentübertragung von einer mit der Welle verbundenen Flanschnabe zum Schleppring besorgt, der über eine in axialer Richtung wirkende Schleppverbindung mit der Ankerscheibe verbunden ist, wobei Schleppverbindung die jedoch kein Drehmoment überträgt und wobei der Schleppring dann über eine weitere ringförmige Übertragungsfeder drehstarr mit der Ankerscheibe verbunden ist. Diese Ausgestaltung der selbsttätigen Nachstellvorrichtung hat den Nachteil, daß mit zunehmendem Abrieb die erste Übertragungsfeder immer stärker ausgelenkt wird, so daß es für die Magnetspule zunehmend schwieriger wird, den Schleppring für die selbsttätige Nachstellung entgegen dem Reibschluß zu verstellen, der zwischen der Welle und dem Schleppring vorhanden sein kann. Letzterer kann zwar dadurch weitgehend beseitigt werden, daß ein in einer Richtung wirkendes Gesperre zwischen der Welle und dem Schleppring vorgesehen wird, dieses ist jedoch nur mit einem erheblichen Fertigungsaufwand herstellbar.

Hiernach ist es die der vorliegenden Erfindung zugrundeliegende Aufgabe, eine selbsttätige Nachstellvorrichtung nach dem gattungsgemäß vorausgesetzten Kupplungs- und/-oder Bremsaggregat dahingehend weiterzuentwickeln, daß ein konstruktiv und fertigungstechnisch einfach herstellbares Aggregat vorgesehen wird, bei dem die Nachstellung bei steigendem Abnutzungsgrad des Reibbelages nicht zunehmend schwieriger wird. Es soll also erreicht werden, daß die Magnetspule, abgesehen von den für das Anziehen der Ankerscheibe zu überwindenden Federkräften, nicht auch noch mit dem Abnutzungsgrad zunehmend stärker werdende Federkräfte bei der Nachstellung zu überwinden hat, so daß ein größerer Nachstellbereich als bisher bei gleichbleibender Kraftverhältnissen zwischen Spulenträger 1 und Ankerscheibe 2 möglich wird. Dadurch soll eine bessere Positioniergenauigkeit über die gesamte Lebensdauer erreicht werden.

Diese Aufgabe wird durch die Lehren des kennzeichnenden Teils des Anspruches 1 gelöst. Die Drehmomentübertragung wird durch die Übertragungsbolzen vorgenommen, wodurch keine Rückstellkräfte wie z.B. bei der Übertragung-Ringfeder (Lamelle) wie bei dem eingangs diskutierten Stand der Technik entstehen. Die Anzugskraft des Spulenträgers wird also ausschließlich von der Druckfederanordnung in der Schleppverbindung bestimmt und bleibt somit immer gleichmäßig. Ein weiterer Vorteil ist zudem die einfache Fertigung der erfindungsgemäßen Lösung. Die Nachstellung erfolgt einfach auf Reibbasis, die zwar im Grundsatz bekannt ist, allerdings nicht in der Gestalt, daß die Reibung zwischen dem Nachstellring und der Welle in besonders einfacher Weise durch in entsprechenden Nuten in der Welle eingelegte O-Ringe oder form- und materialmäßig ähnliche Reibelemente erfolgt.

Ein weiterer Vorteil der erfindungsgemaßen Lösung besteht darin, daß, weil die Übertragungsbolzen mit der Ring-Übertragungsfeder (Lamelle) verbunden sind, die Ankerscheibe zwar durch die axial verschieblichen Bolzen geführt ist, andererseits jedoch noch eine Ausgleichsmöglichkeit aufgrund der Übertragungs-Ringfeder aufweist. Wären die Übertragungsbolzen direkt mit der Ankerscheibe verbunden, könnte sich die Ankerscheibe nicht so gleichmäßig am Spulenträger anlegen und es würde zu Verklemmungen führen. Die Übertragungsfeder dient also wie eine elastische (Wellen-)Ausgleichskupplung.

In der DE-A-2 135 821 werden zwar auch axial verschiebliche Bolzen in Verbindung mit Blattfedern zur Übertragung des Drehmomentes von der Nabe eines Kupplungs/Bremsaggregats auf die axial verschiebliche Ankerscheibe verwendet, doch erfolgt die Nachstellung an mindestens drei Stellen gleichzeitig, was ungünstiger als eine zentrale Nachstellung wie im vorliegenden Fall ist.

Aufgrund der erfindungsgemäßen Konstruktion werden im übrigen eine hohe Positioniergenauigkeit, gleichmäßige und schnelle Schaltzeiten, weiches Schalten der Kupplung und Bremse, Wartungsfreiheit und lange Lebensdauer erreicht.

Ein Ausführungsbeispiel der vorliegenden Erfindung wird unter Bezugnahme auf die beigefügten Zeichnungen näher beschrieben. Darin zeigt

Fig. 1      eine Schnittansicht eines Bremsaggregates mit der automatischen Nachstellung nach der vorliegenden Erfindung in stromlosem Zustand, d.h. in Ruhestellung im ungebremsten Zustand;

Fig. 2A    das gleiche Bremsaggregat in elektromagnetisch erregtem Zustand bei angezogener Bremse noch ohne eine Abnützung bzw. Nachstellung derselben;

Fig. 2B    das gleiche Bremsaggregat im gleichen gebremsten Zustand, jedoch nach Abnützung bzw. Nachstellung um das Maß x; und

Fig. 3    eine Schnittansicht eines elektromagnetischen Kupplungs-/Bremsaggregats, wobei die erfindungsgemäße automatische Nachstellung sowohl auf der Bremsen- als auch auf der Kupplungsseite realisiert ist.

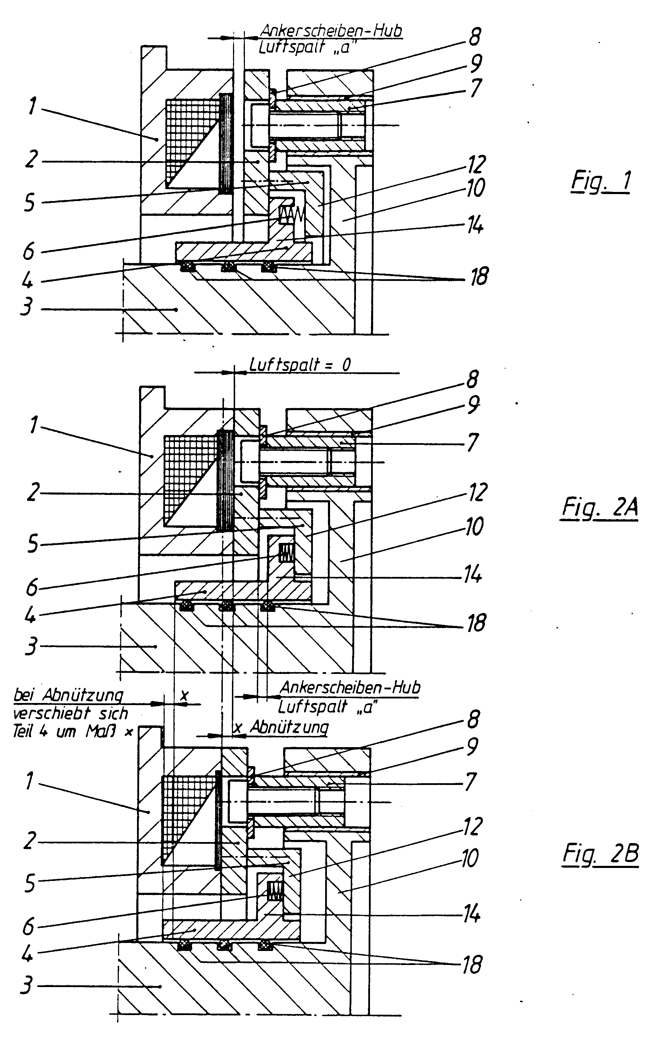

Die Fig. 1 zeigt einen an einer Maschinenwand oder dergl. befestigten Spulenträger 1 mit der Elektromagnetwicklung, auf dem ein abnutzbarer Reibbelag vorgesehen ist. Der Spulenträger 1 umgibt die abzubremsende Antriebswelle 3, die einen radial sich nach außen erstreckenden Umfangsflansch 10 aufweist, der in der Nähe seines äußeren Radiusses mit mehreren achsparallen auf dem Umfang gleichmäßig verteilten Bohrungen versehen ist, die in einem verstärkten Bereich des Umfangsflansches 10 vorgesehen sind und in denen jeweils ein Übertragungsbolzen 7 in einem Gleitlagerelement 9 in Achsrichtung verschieblich angeordnet ist, und zwar zu einem noch näher zu erläuternden Zweck. Es können beispielsweise drei gleichmäßig auf dem Umfang verteilte Übertragungsbolzen vorgesehen sein, von denen in den Figuren nur einer dargestellt ist. Der Übertragungsbolzen 7, der in der Gleitlagerhülse 9 verschieblich ist, besteht in der dargestellten Ausführungsform aus einer Gewindehülse und einer darin eingeschraubten Zylinderschraube, wobei zwischen der Hülse und der Zylinderschraube eine in Achsrichtung federnde, in Umfangsrichtung drehstarre Übertragungs-Ringfeder 8 festgeklemmt ist. Diese Übertragungs-Ringfeder 8 weist auf ihrem Umfang gleichmäßig verteilte Bohrungen auf, in die jeweils eine Zylinderschraube eingesetzt ist, um die Ringfeder 8 gegen die Hülse des Übertragungsbolzens 7 zu klemmen. Die Ringfeder ist auf ihrem Umfang jeweils mittig zwischen den beispielsweise drei Übertragungsbolzen 7 mit der Ankerscheibe 2 vernietet dergestalt, daß zwischen den Übertragungsbolzen 7 und der Ankerscheibe 2 eine in Umfangsrichtung drehstarre, in Axialrichtung jedoch nachgiebige Verbindung hergestellt wird. Die Befestigung der Übertragungs-Ringfeder 8 an der Ankerscheibe durch die Niete ist in den Schnittebenen der Figuren nicht sichtbar.

Die Ankerscheibe 2 ist wie ersichtlich mit einer Aussparung etwa in Form einer Bohrung versehen, um einen Freiraum für den Kopf der Zylinderschraube des Übertragungsbolzens 7 zu schaffen.

Die Ankerscheibe 2 ist radial einwärts von dem Anschlußbereich des Übertragungsbolzens 7 bzw. der Übertragungs-Ringfeder 8 mit einem im Querschnitt winkeligen oder topfförmigen Schleppring 5 fest verschraubt. Der in radialer Richtung nach einwärts vorspringende Abschnitt 12 dieses Schleppringes 5 hintergreift einen radial nach auswärts vorspringenden Flanschabschnitt 14 eines hülsenförmigen Nachstellringes 4, der im Reibschluß auf der Antriebswelle 3 aufsitzt. Zur Erzeugung des Reibschlusses zwischen der Antriebswelle 3 und dem hülsenförmigen Teil des Nachstellringes 4 sind beispielsweise drei elastische O-Ringe 18 in entsprechende Nuten in der Oberfläche der Antriebswelle 3 eingesetzt.

Zwischen dem radial nach auswärts vorspringenden Flanschabschnitt 14 des Nachstellringes 4 und dem radial nach einwärts vorspringenden Abschnitt 12 des Schleppringes 5 ist eine Druckfeder 6 eingesetzt, die im stromlosen Zustand der Elektromagnetbremse den Schleppring 5 und damit die Ankerscheibe 2 in Fig. 1 so weit nach rechts drückt, daß die von der Bremsfläche der Ankerscheibe 2 abgewandte Stirnfläche derselben an der von der Druckfeder 6 abgewandten Stirnfläche des radial nach außen vorspringenden Flanschabschnittes 14 des Nachstellringes 4 anliegt.

Die Funktion der automatischen Nachstellung bzw. des Bremsaggregates ergibt sich aus den folgenden Erläuterungen:

Fig. 1 zeigt die Bremse in Ruhestellung bzw. die automatische Nachstellvorrichtung in der Ausgangslage. Zwischen dem Spulenträger 1 und der Ankerscheibe 2 befindet sich ein Luftspalt a, um die Bremse im stromlosen Zustand im ungebremsten Zustand zu halten, und zwar aufgrund der Wirkung der Druckfeder 6 zwischen dem durch Reibschluß auf der Antriebswelle festgelegten Nachstellring 4 und dem mit der Ankerscheibe 2 verschraubten Schleppring 5. Wird nun auf die Magnetwicklung im Spulenträger 1 Spannung gegeben, wird die Ankerscheibe 2 an den Spulenträger 1 herangezogen, und zwar entgegen der Kraft der Druckfeder 6. Dadurch wird der Luftspalt a zu Null, was in Fig. 2A dargestellt ist. Die Drehmomentübertragung von der abzubremsenden Antriebswelle 3 erfolgt über den Radialflansch 10 zu den drei am Umfang desselben verteilten, axial verschieblichen Übertragungsbolzen 7, welche mit der Übertragungs-Ringfeder 8 verschraubt oder anderweitig befestigt sind. Die Drehmomentübertragung erfolgt somit von Teil 3 auf Teil 10 und Teil 7, auf Teil 8 sowie von dort auf Teil 2 und schließlich zum Spulenträger 1, der an einer nicht dargestellten Maschinenwand oder dergl. befestigt ist was somit zur Abbremsung der Antriebswelle 3 führt.

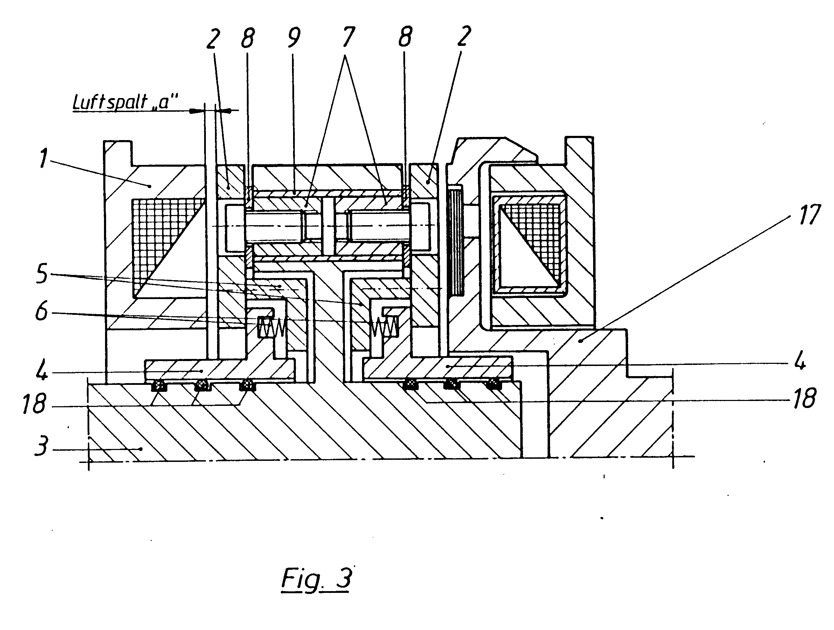

Im Falle eines Kupplungs-Bremsaggregats nach der Fig. 3 ergibt sich die Funktion der dort links eingezeichneten Bremsenseite in identischer Weise. Bei der Kupplungsseite wird anstatt des Spulenträgers der Rotor 17 zur Drehmomentübertragung auf die Abtriebswelle verwendet.

Ansonsten ist der Aufbau der Kupplungsseite in der Fig. 3 identisch mit demjenigen der Bremsenseite, d.h. die Ankerscheibe 2 ist auch hier mit dem Schleppring 5 fest verschraubt und zwischen dem Schleppring 5 und dem Nachstellring 4 befindet sich eine Druckfeder 6, die z.B. auch als Wellscheibe ausgeführt werden kann. Durch diese Feder wird die Ankerscheibe 2 zur Anlage an den radial auswärts vorspringenden Abschnitt des Nachstellringes 4 angedrückt.

Wenn die Ankerscheibe 2 bei erregtem Elektromagneten an den Spulenträger angezogen wird (Fig. 2A), wird die Feder 6 zusammengedrückt und die Ankerscheibe 2 verschiebt sich um den Luftspalt a (Ankerscheibenhub) relativ zum Flanschabschnitt 14 des Nachstellringes 4 hin ab, der durch die Pressung der drei O-Ringe in seiner Position stehen bleibt. Wird die Spannung von der Wicklung des Spulenträgers 1 wieder weggenommen, so geht die Ankerscheibe 2 wieder in ihre Ausgangsstellung zurück (Fig. 1).

Entsteht nun eine Abnützung x am Spulenträger 1 oder entsprechend am Rotor 17 des Kupplungs-Bremsaggregates der Fig. 3, dann wird die Ankerscheibe 2 zusätzlich zum Luftspalt a um den Betrag x (nach links (Bremsenseite) bzw. nach rechts (Kupplungsseite) bewegt, d.h. der Schleppring 5 schiebt den Nachstellring 4 um den Abnützungsbetrag x in der entsprechenden Richtung. In dieser neuen Stellung wird der Nachstellring 4 dann wieder durch die drei O-Ringe 8 gehalten, welche eine radiale Pressung haben. Bei Wegnahme der Spannung von der Wicklung des Spulenträgers 1 wandert nun die Ankerscheibe aufgrund der Wirkung der Druckfeder 6 wieder nach rechts (auf der Kupplungsseite nach links), aber nicht mehr um den Abnutzungsbetrag x und den Luftspalt a, sondern nur noch um den Luftspalt a, da sich der Nachstellring 4 um den Abnützungsbetrag x verschoben hat.

Je mehr der Spulenträger der Bremsenseite bzw. der Rotor der Kupplungsseite sich abnützt, umso mehr wandert die Ankerscheibe 2 mit dem Schleppring 5 hinterher, wobei jedoch die Ankerscheibe immer nur den Hub des Luftspaltes a ausführt.

Durch die Anordnung von im wesentlichen reibungsfrei axial verschieblichen Übertragungsbolzen 7 zur Befestigung der Übertragungs-Ringfeder 8 an dem Radialflansch 10 der Antriebswelle 3 übt die Druckfeder 6 immer die gleiche Rückstellkraft auf die Ankerscheibe 2 aus, und zwar unabhängig von dem jeweiligen Abnützungsgrad. Aufgrund der Verbindung der beispielsweise drei auf dem Umfang verteilten Übertragungsbolzen 7 mit der Ankerscheibe 2 und der Übertragungs-Ringfeder 8 kann immer ein gewisser Fluchtungsausgleich für die Ankerscheibe 2 aufgrund möglicherweise ungleichmäßiger Abnützung oder sonstiger Einflüsse erfolgen, so daß es nicht zu einem Verklemmen der axial verschieblichen Übertragungsbolzen und damit der Ankerscheibe kommen kann. Aufgrund des immer gleichmäßigen Luftspaltes ergeben sich immer gleichbleibende Schaltzeiten und eine erhöhte Positioniergenauigkeit des Kupplungs- bzw. Bremsaggregats. Eine Verstellung des Luftspaltes ist aufgrund der automatischen Nachstellung nicht erforderlich, d.h. die Anordnung arbeitet wartungsfrei, und wegen der unabhängig vom Abnutzungsgrad immer gleichmäßigen Kraft der Druckfeder 6 bleibt die Anzugskraft des Spulentragers 1 in jedem Fall immer gleich.

## Patentansprüche

1. Selbsttätige Nachstellvorrichtung für den Luftspalt eines durch elektromagnetische und Federkräfte betätigten Kupplungs- und/oder Bremsaggregats,
   - mit einer das zu übertragende/abzubremsende Drehmoment führenden Welle (3),
   - mit einer konzentrisch zur Welle (3) angeordneten Ankerscheibe (2), die von einem eine Magnetspule tragenden Spulenträger (1) in Richtung auf diesen elektromagnetisch beaufschlagbar ist,
   - mit einem auf der Welle (3) angeordneten, axial verschieblichen Nachstellring (4), der im Reibschluß auf der Welle (3) sitzt und Teil einer Schleppverbindung ist, die die entgegen einer Federwirkung (Feder 6) erfolgende Axialverschiebung der Ankerscheibe (2) in Richtung auf den Spulenträger (1) durch einen den Nachstellring (4) hintergreifenden Abschnitt (12) der Schleppverbindung begrenzt,
   - mit einem mit der Welle verbundenen Radialflansch (10), der das zu übertragende Dehmoment über eine drehstarre, in axialer Richtung nachgiebige Verbindung an die axial verschiebliche Ankerscheibe (2) überträgt, wobei die Verbindung eine an der Ankerscheibe (2) an umfangsmäßig voneinander beabstandeten Anschlußpunkten befestigte Übertragungs-Ringfeder (8) aufweist, dadurch gekennzeichnet,

- daß die in axialer Richtung nachgiebige drehstarre Verbindung weiterhin eine Anzahl von im Radialflansch (10) axial verschieblich geführten Übertragungsbolzen (7) aufweist, an denen die Übertragungs-Ringfeder (8) an umfangsmäßig gegenüber den Anschlußpunkten versetzten Stellen befestigt ist,
- daß der Reibschluß zwischen der Welle (3) und dem Nachstellring (4) durch in entsprechende Umfangsnuten auf der Welle eingelegte elastische O-Ringe (18) oder form- und materialmäßig ähnliche Reibelemente erzeugt wird,
- und daß zwischen dem Nachstellring (4) und dem diesen hintergreifenden Abschnitt (12) der Schleppverbindung eine Druckfederanordnung (6) vorgesehen ist.

2. Vorrichtung nach Anspruch 1, dadurch gekennzeichnet, daß die Druckfederanordnung (6) eine Wellscheibe, eine Kugellagerausgleichsscheibe oder eine Tellerfeder umfaßt.

3. Vorrichtung nach Anspruch 1 oder 2, dadurch gekennzeichnet, daß die Schleppverbindung in Gestalt eines an der Ankerscheibe (2) befestigten Schleppringes (5) mit einem radial einwärts vorspringenden Abschnitt (12) vorgesehen ist, der einen radial auswärts vorspringenden Flanschabschnitt (14) des Nachstellringes (4) hintergreift.

4. Vorrichtung nach einem der voranstehenden Ansprüche, dadurch gekennzeichnet, daß der Übertragungsbolzen (7) in Gestalt einer Hülse mit einer darin eingeschraubten Schraube vorliegt, die die Übertragungs-Ringfeder (8) zwischen Schraube und Hülse festklemmt.

5. Vorrichtung nach einem der voranstehenden Ansprüche, dadurch gekennzeichnet, daß die Bohrung für den Übertragungsbolzen (7) in dem Radialflansch (10) der Welle (3) mit einer Gleitlagerhülse (9) ausgekleidet ist.

6. Vorrichtung nach einem der voranstehenden Ansprüche, dadurch gekennzeichnet, daß der Nachstellring (4) im Kontaktbereich mit den O-Ringen (18) hülsenartig verbreitert ist.

## Claims

1. An automatic adjusting device for the air gap of a clutch and/or braking unit actuated by electromagnetic and spring forces,
   - with a shaft (3) guiding the torque which is to be transmitted/braked,
   - with an armature disc (2) arranged concentrically to the shaft (3), which disc can be acted upon electromagnetically, by a coil holder (1) bearing a magnetic coil, in a direction towards said holder,
   - with an axially displaceable adjusting ring (4) located on the shaft (3), which ring is seated on the shaft (3) with frictional contact and forms part of a drag connection which limits the axial displacement of the armature disc (2) towards the coil holder (1) which takes place against the action of a spring (spring 6) by means of a section (12) of the drag connection which engages behind the adjusting ring (4),
   - with a radial flange (10) connected to the shaft, which flange transmits the torque to be transmitted, via a connection which is rigid to rotation and is resilient in the axial direction, to the axially displaceable armature disc (2), the connection having an annular transmission spring (8) attached to the armature disc (2) at connection points spaced apart on the circumference,
   characterised in that
   - the connection which is rigid to rotation and is resilient in the axial direction additionally has a number of transmission pins (7) guided in the radial flange (10) so as to be axially displaceable, to which pins the annular transmission spring (8) is attached at points offset on the circumference with respect to the connection points,
   - the frictional connection between the shaft (3) and the adjusting ring (4) is produced by elastic O-rings (18) or friction elements which are similar in terms of shape and material inserted in corresponding circumferential grooves on the shaft,
   - and that a pressure spring arrangement (6) is provided between the adjusting ring (4) and the section (12) of the drag connection which engages behind it.

2. A device according to Claim 1, characterised in that the pressure spring arrangement (6) comprises a corrugated disc, a ball-bearing compensating disc or a disc spring.

**3.** A device according to Claim 1 or 2, characterised in that the drag connection in the form of an inertia ring (5) attached to the armature disc (2) is provided with a section (12) which projects radially inwards, which engages behind a flange section (14) of the adjusting ring (4) which projects radially outwards.

**4.** A device according to one of the preceding Claims, characterised in that the transmission pin (7) is in the form of a sleeve with a screw screwed therein, which clamps the annular transmission spring (8) securely between the screw and sleeve.

**5.** A device according to one of the preceding Claims, characterised in that the bore for the transmission pin (7) in the radial flange (10) of the shaft (3) is lined with a sliding bearing sleeve (9).

**6.** A device according to one of the preceding Claims, characterised in that the adjusting ring (4) is widened in sleeve-like manner in the region of contact with the O-rings (18).

**Revendications**

**1.** Dispositif de réglage automatique de l'entrefer d'un appareil d'embrayage et/ou de frein électromagnétique et actionné par des forces élastiques, comprenant
- un arbre (3) provoquant un moment de rotation à transmettre/freiner,
- un disque d'induit (2) qui est agencé de manière concentrique à l'arbre (3) et qui, par un support de bobine (1) portant une bobine magnétique, peut être sollicité par voie électromagnétique en direction de ce dernier,
- un anneau de réglage (4) axialement déplaçable qui est agencé sur l'arbre (3), repose sur l'arbre (3) en réalisant une liaison par frottement et est une partie d'une liaison d'entraînement qui limite le déplacement axial, produit à l'encontre d'une action de ressort (ressort 6), du disque d'induit (2) en direction du support de bobine (1) par une section (12), prenant derrière l'anneau de réglage (4), de la liaison d'entraînement,
- une bride radiale (10) qui est reliée à l'arbre et qui transmet le moment de rotation à transmettre au disque d'induit axialement déplaçable (2) par l'intermédiaire d'une liaison rigide quant à la rotation et flexible en direction axiale, la liaison présentant un ressort annulaire de transmission (8) fixé sur le disque d'induit (2) en des points de raccordement mutuellement distants périphériquement, caractérisé

en ce que la liaison fixe en rotation et flexible en direction axiale présente par ailleurs un certain nombre d'axes de transmission (7) qui sont guidés de manière axialement déplaçable dans la bride radiale (10) et sur lesquels le ressort annulaire de transmission (8) est fixé en des emplacements périphériquement décalés par rapport aux points de raccordement,

en ce que la liaison par frottement entre l'arbre (3) et l'anneau de réglage (4) est produite par des joints toriques (18) élastiques insérés dans des rainures périphériques correspondantes de l'arbre ou par des éléments de frottement analogues en forme et matière, et

en ce qu'un agencement de ressort de pression (6) est prévu entre l'anneau de réglage (4) et la section (12), prenant derrière celui-ci, de la liaison d'entraînement.

**2.** Dispositif suivant la revendication 1, caractérisé en ce que l'agencement de ressort de pression (6) comporte une rondelle ondulée, un disque de compensation à roulement à billes ou un ressort à disque.

**3.** Dispositif suivant l'une des revendications 1 et 2, caractérisé en ce que la liaison d'entraînement est prévue sous la forme d'un anneau d'entraînement (5) fixé sur le disque d'induit (2) et présentant une section (12) faisant saillie radialement vers l'intérieur qui prend derrière une section de bride (14), faisant saillie radialement vers l'extérieur, de l'anneau de réglage (4).

**4.** Dispositif suivant l'une des revendications précedentes, caractérise en ce que l'axe de transmission (7) se présente sous la forme d'une douille avec une vis vissée a l'intérieur qui pince à bloc le ressort annulaire de transmission (8) entre la vis et la douille.

**5.** Dispositif suivant l'une des revendications précédentes, caractérisé en ce que le trou destiné à l'axe de transmission (7) dans la bride radiale (10) de l'arbre (3) est revêtu d'une douille de palier lisse (9).

**6.** Dispositif suivant l'une des revendications précédentes, caractérisé en ce que l'anneau de réglage (4) est élargi à la manière d'une douille dans la zone de contact avec les joints toriques (18).

Ankerscheiben-Hub
Luftspalt „a"

_Fig. 1_

Luftspalt = 0

_Fig. 2A_

bei Abnützung
verschiebt sich
Teil 4 um Maß x

x

Ankerscheiben-Hub
Luftspalt „a"

x Abnützung

_Fig. 2B_

Luftspalt „a"

*Fig. 3*

EP 0 374 268 B1